# EUROPEAN PATENT APPLICATION

(11) **EP 2 664 432 A1**
(43) Date of publication of application: **20.11.2013**
(21) Application number: 12168011.0
(22) Date of filing: 15.05.2012
(51) Int. Cl.: B29C 45/14, B29C 45/00

(54) **Deformable weldment of cosmetic overmolding**

(71) Applicant: BlackBerry Limited, Waterloo, ON N2L 3W8 (CA)
(72) Inventor: Maclean, Kenneth John, Kanata, Ontario K2K 3K1 (CA); Kyowski, Timothy Herbert, Waterloo, Ontario N2L 3W8 (CA)
(74) Representative: Noble, Nicholas

(57) **Abstract**

A structure (102) configured to be overmolded with a material (107) includes a deformable portion (122) that may be biased by a slider (108a) of a mold. When biased by the slider (108a), the deformable portion (122) may deform in the direction that the deformable portion is being biased by the slider. The deformable portion may be deformed in order to reduce flash during an injection molding process.

## Description

### BACKGROUND

### 1. Technical Field.

The present disclosure relates generally to overmolding, and more particularly to a deformable structure that is configured to conform to a mold.

### 2. Related Art.

Electronic devices, including handheld devices, may include a housing that is made up of two or more components. One component may be overmolded with another component. An injection molding process may be used to overmold the components. During the injection molding process, a thermoplastic material may be fed into a heated barrel, mixed, and forced or injected into a mold space or cavity, where the material cools and hardens to the shape or configuration of the cavity. A mold space may be determined, at least in part, by a mold. A mold may be made of a material that may be precision-machined to form features of a desired part or component. A wide variety of parts may be formed using injection molding, including electronic devices and body panels of automobiles.

### BRIEF DESCRIPTION OF THE DRAWINGS

Fig. 1 shows a top view of an example system that includes a deformable structure positioned in a mold, where a slider is configured in an unbiased position.

Fig. 2 shows a top view of the example system shown in Fig. 1, where the slider is configured in a biased position.

Fig. 3 shows a top view of the structure shown in Fig. 1 in isolation.

Fig. 4 shows a top view of a first alternative example system that includes a deformable structure positioned in a mold, where a plurality of sliders are configured in an unbiased position.

Fig. 5 shows a top view of the first alternative example system shown in Fig. 4, where the plurality of sliders are configured in a biased position.

Fig. 6 shows a top view of a second alternative example system that includes a deformable structure positioned in a mold, where a plurality of sliders are configured in an unbiased position.

Fig. 7 shows a top view of the second alternative example shown in Fig. 6, where the plurality of sliders are configured in a biased position.

Fig. 8 shows a side view of a third alternative example system that includes a deformable structure positioned in a mold, where a plurality of sliders are configured in an unbiased position.

Fig. 9 shows a side view of the third alternative example shown in Fig. 8, where the plurality of slides are configured in a biased position.

Fig. 10 shows a flow diagram of an example method of overmolding a deformable structure.

### DETAILED DESCRIPTION OF THE PREFERRED EMBODIMENTS

The present disclosure describes a structure that is configured to conform and/or adapt to a mold when positioned in the mold for being overmolded with at least one material. The structure may be configured to conform and/or be adaptable to the mold by conforming to tolerances of the mold. As a result, tolerance mismatches between the mold and the structure may be eliminated, reduced or minimized. By eliminating any mismatches, excess or undesirable material that may form at or around one or more transition areas between the material and the structure may be reduced during the overmolding process. Consequently, secondary or subsequent processes that remove the excess or undesirable material may be avoided, which may result in cost savings.

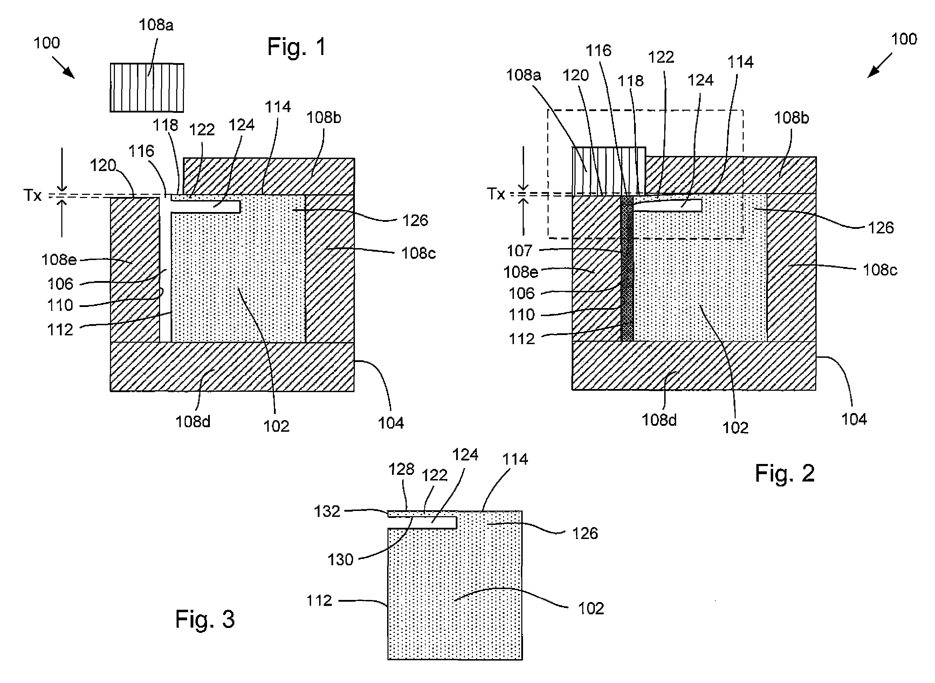

Fig. 1 shows a top view of an example system 100 that may include an example structure 102 positioned in a mold 104. The structure 102 may be configured to conform and/or be adaptable to the mold 104. In some examples, the structure 102 may be made of metal, such as steel (e.g., stainless steel), although other metal or non-metal materials may be used. As examples, the structure 102 may be a weldment made up of several parts welded together, or the structure may be a machined part. The structure 102 may be placed or positioned in the mold 104. In the mold 104, the structure 102 may be overmolded with at least one material, such as plastic. The mold 104, along with the structure 102 positioned in the mold 104, may define and/or determine at least one area or mold space 106 in which the material may be injected or inserted. The material may be injected into the mold space 106 using an overmolding process, such as injection molding. One or more gates (now shown) may be used to inject the material during the injection molding. Additionally, although not shown, the structure 102 may include one or more entanglement features that may facilitate attachment of the material to the structure 102.

In some example configurations, the material may be in a molten state when the material is injected into the mold space 106. In the molten state, the material may flow into the mold space 106 and fill at least part of the mold space 106. As the material fills the mold space 106, the material may conform to the shape of the mold space 106 determined by the mold 104 and the structure 102. Fig. 2 shows a material 107 that may be injected into the mold space 106 and may conform to the shape of the mold space 106. During the overmolding process, the material 107 may change from a molten state to a solid state. A cooling process may be used to cool the material 107 so that the material 107 changes from the molten state to the solid state. In the solid state, the material 107 may be rigidly structured and/or formed in the shape of the mold space 106 so that when the overmolded hybrid of the structure 102 and the material 107 is removed from the mold 104, the material portion of the hybrid remains in the shape of the mold space 106.

The mold 104 may include one or more mold tools 108. Figs. 1 and 2 show five mold tools 108a, 108b, 108c, 108d, 108e, although other numbers of mold tools in alternative configurations may be used. A positioning or configuration of the mold tools 108 relative to each other and/or relative to the structure 102 may define and/or determine the mold space 106. In some example configurations, the mold tools 108 may surround or substantially surround an outer perimeter of the structure 102. In addition or alternatively, depending on the positioning or configuration of the mold tools 108, at least some of the mold tools 108 may abut and/or contact each other. Also, in some example configurations, at least some of the mold tools 108 may abut and/or contact one or more portions or one or more sides, of the structure 102. The mold tools 108 may abut and/or contact the structure 102 where the structure 102 may not be overmolded with the material 107. In addition or alternatively, at least a portion of one or more of the mold tools 108 may be spaced apart from the structure 102. A mold tool 108 may be spaced apart from the structure 102 by a predetermined distance. For example, as shown in Fig. 1, a side 110 of the mold tool 108e may be spaced apart from a side 112 of the structure 102 that faces the side 110. The side 110 of the mold tool 108e, the facing side 112 of the structure 102, and/or the distance by which they are spaced apart may define and/or determine, at least in part, an area or shape of the mold space 106.

At least one of the mold tools 108 may be a slider 108a. The slider 108a may be configured to be a movable piece that seals or closes off the mold space 106 before the material 107 may be injected into the mold space 106. The slider 108a may be configured to move between an unbiased position and a biased position. Fig. 1 shows the slider 108a in the unbiased position. In the unbiased position, the slider 108a may be spaced apart and/or positioned away from the structure 102. The structure 102 may be unbiased and/or unclamped by the slider 108a when the slider 108a is in the unbiased position.

Fig. 2 shows the slider 108a in the biased position. In the biased position, the slider 108a may bias and/or be clamped to the structure 102. In an example configuration, the slider 108a may bias and/or be clamped to a side 114 of the structure 102 that is adjacent to the side 112 that determines and/or defines the mold space 106. The side 114 adjacent to the side 112 determining and/or defining the mold space 106 may be coplanar and/or even with an opening or end 116 of the mold space 106 that the slider 108a is configured to seal or close off. In some example configurations, as shown in Fig. 2, the slider 108a may bias a portion 118 of the side 114 that extends from the side 112 and over a length that is less than a total length of the side 114. The slider 108a may also be configured to bias and/or be clamped to a side 120 that is adjacent the side 112 of the mold tool 108e that defines and/or determines the mold space 106. The side 120 may be configured to be coplanar or substantially coplanar with the side 114 of the structure 102 and the end 116 of the mold space 106.

When the slider 108a is in the biased position and is biasing and/or clamped to the structure 102 and the mold tool 108e at the sides 114 and 120, respectively, the slider 108a may be configured to seal or close off the mold space 106 so that when the material 107 is injected into the mold space 106, the material 107 does not move to places around the structure 102 and/or the mold 104 that are outside of the mold space 106. In some example configurations, a mismatch, denoted as "Tx" in Figs. 1 and 2, may exist between the structure 102 and the mold 104 such that the side 120 of the mold tool 108e may not be exactly or precisely coplanar with the side 114 of the structure 102. The mismatch Tx may exist due to differences in tolerances, such as manufacturing tolerances, between the structure 102 and the mold 104, including one or more of the mold tool 108. In some example configurations, where a structure to be overmolded is not adaptable and/or configured to conform to the mold 104, one or more spaces or gaps may form around the mold tools and/or the structure due to mismatches when the slider 108a moves to the biased position. When the material 107 is injected into the mold space 106, the material 107 may move into the spaces or gaps. As a result, unwanted accumulations of material 107, which may be referred to as flash, may form in the spaces or gaps outside the mold space 106. In some example configurations, the spaces or gaps may form at or around a transition area between the structure 102 and the material 107, such as along the side 114 and the end 116. As a result, an unsmooth, uneven, and/or non-seamless transition between the structure 102 and the material 107 may form along the side 114 and the end 116 due to flashing. In some manufacturing processes, one or more secondary processes or operations may be performed after injection molding to eliminate the unwanted material and create a smooth transition between the structure 102 and the material 107 along the side 114 and the end 116. The secondary processes or operations may be costly and/or increase the overall cost to manufacture the overmolded piece.

The structure 102 in the present disclosure may be configured to adapt and/or conform to the mold 104 such that mismatches between the structure 102 and the mold 104 may be reduced, eliminated, and/or minimized. In turn, secondary processes to cure flashing may be reduced, eliminated, and/or minimized. The structure 102 may be configured to adapt and/or conform to the mold 104 by having a deformable portion, such as a deformable tab, 122 that may be configured to move and/or deform from an undeformed position to a deformed position. When the slider 108a is in the unbiased position, the tab 122 may be in the undeformed position. When the slider 108a is in the biased position, the slider 108a may bias the tab 122, which may move and/or deform the tab 122 to the deformed position. To move to the deformed position, the tab 122 may deform into an area 124 that is adjacent the tab 122. The tab 122 may be configured to move into the area 124 when the slider 108a moves into the biased position and biases and/or clamps to the structure 102. Additionally, the tab 122 may be configured to move into the area 124 by moving in a direction that is the same or substantially the same as the direction in which the slider 108a is biasing the structure 102. The area 124 may be positioned relative and/or adjacent to the tab 122 so that the area 124 provides space and/or room for the tab 122 to move in the direction that the slider 108a is biasing the structure 102.

Fig. 3 shows the structure in isolation. The tab 122 may extend from a non-deformable portion 126 to the side 112 that defines and/or determines the mold space 106. The tab 122 may extend from the non-deformable portion in a direction that is perpendicular or substantially perpendicular to the direction in which the slider 108a may bias the structure 102. The tab 122 may include a first side 128 that is configured to face the slider 108a and/or receive the bias being exerted by the slider 108a. In some example configurations, the first side 128 may be configured to be directly biased by and/or come into contact with the slider 108a. For example, the first side 128 may include the portion 118 of side 114 that is configured to come into contact with the slider 108a. The tab 122 may also include a second side 130 that opposes the first side 128 and that determines and/or defines the area 124 in which the tab 122 may move and/or deform. Additionally, the tab 122 may include a third side 132 that is adjacent the first side 128 and the second side 130. The third side 132 may form part of and/or be coplanar with the side 112 that determines and/or defines the mold space 106.

The area 124 may be configured as a notch, slot, or slit in the structure 102. The area 124 may extend from the side 112 to the non-deformable portion 126 over a length that is equal to or substantially equal to the length of the tab 122. The width of the area 124 may be large enough to account for any mismatch between the structure 102 and the mold tools 108 so that the tab 122 has enough room to move into the area 124 and a flush contact may be made between the slider 108a and each of the side 120 and the side 114. When a flush contact is made, the material 107 may be prevented from moving into unwanted areas around the structure 102 and outside the mold space 106, which may eliminate, reduce, and/or minimize flash during the injection molding.

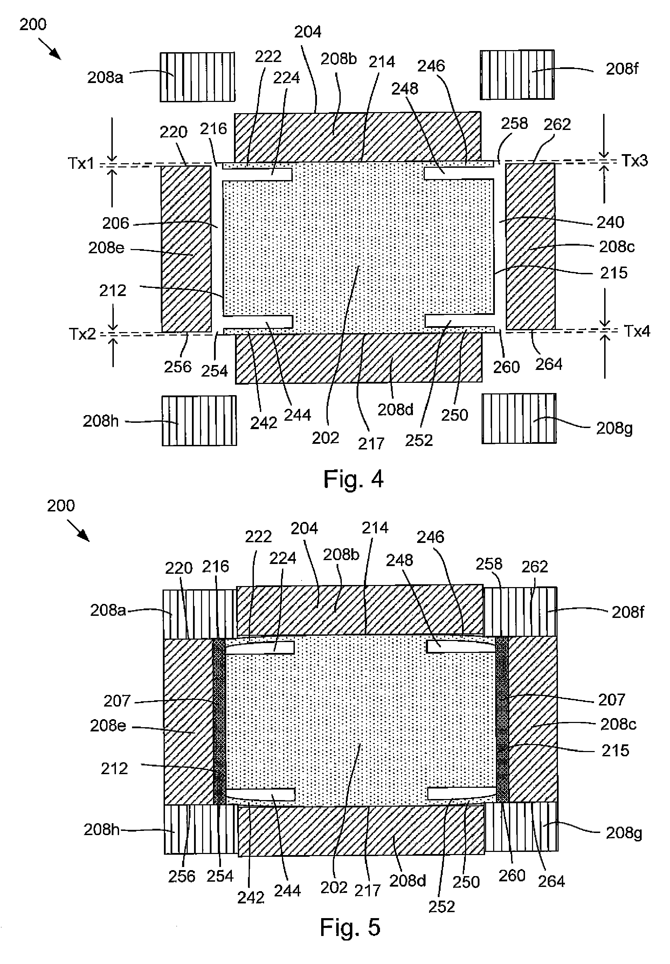

Figs. 4 and 5 show top views of an alternative example system 200 that includes an example structure 202 positioned in an example mold 204 and that may be configured to conform and/or adapt to the mold 204. In the example system 200, two mold spaces, a first mold space 206 and a second mold space 240 may be formed by the structure 202 and the mold 204 and may be configured to provide two areas for material 207 to be injected and be overmolded and/or affixed to the structure 202. In one example configuration as shown in Figs. 4 and 5, the material 207 injected into the second mold space 240 may be overmolded and/or affixed to a side 215 of the structure 202 that opposes the side 212, which is configured to be overmolded with material 207 injected into the mold space 206. Alternative example configurations are possible. For example, the mold spaces may be positioned so that adjacent sides of the structure are overmolded with the material.

In the example system 200, a plurality of sliders (e.g., two sliders) may be used to seal and/or close off each of the mold spaces 206, 240. For example, a first slider 208a and a second slider 208h may be used to seal and/or close off the first mold space 206. Similarly, a third slider 208f and a fourth slider 208g may be used to seal and/or close off the second mold space 240. Where two sliders are used to seal and/or close off a mold space, the sliders may move in opposing directions relative to each other from the unbiased positions to the biased positions. For example, the first slider 208a and the second slider 208h may move in opposing directions relative to each other when moving between the unbiased position and the biased position. Similarly, the third slider 208f and the fourth slider 208g may move in opposing directions relative to each other when moving between the unbiased position and the biased position.

Additionally, in the example system 200, the structure 202 may include a plurality of deformable tabs and a plurality of areas in which the tabs may move and/or be deformed when biased by the plurality of sliders. In one example configuration, a number of deformable tabs and/or areas may be proportional and/or equal to the number of sliders used to bias and/or clamp to the structure 202. For example, the structure 202 may include four deformable tabs and four areas, which are amounts proportional and/or equal to the four sliders 208a, 208f, 208g, 208h. Additionally, each of the tabs may be configured to be biased by a respective slider. Also, each of the tabs may be configured to move and/or be deformed in the same or substantially the same direction as the direction in which the tabs are being biased by the sliders.

For example, as shown in Fig. 5, when the first slider 208a is in the biased position, a first tab 222 may be configured to be biased and/or clamped to the first slider 208a. When the first tab 222 is biased and/or clamped to the first slider 208a, the first tab 222 may be configured to move into an area 224 that is adj acent the first tab 222. The first tab 222 may move into the area 224 in a direction that is the same or substantially the same as the direction in which the first slider 208a is biasing the first tab 222. Similarly, when the second slider 208h is in the biased position, a second tab 242 may be configured to be biased and/or clamped to the second slider 208h. When the second tab 242 is biased and/or clamped to the second slider 208h, the second tab 242 may be configured to move into an area 244 that is adjacent the second tab 242. The second tab 242 may move into the area 244 in a direction that is the same or substantially the same as the direction in which the second slider 208h is biasing the tab 242. Likewise, when the third slider 208f is in the biased position, a third tab 246 may be configured to be biased and/or clamped to the third slider 208f. When the third tab 246 is biased and/or clamped to the third slider 208f, the third tab 246 may be configured to move into an area 248 that is adjacent the third tab 246. The third tab 246 may move into the area 248 in a direction that is the same or substantially the same as the direction in which the third slider 208f is biasing the tab 246. Further, when the fourth slider 208g is in the biased position, a fourth tab 250 may be configured to be biased and/or clamped to the fourth slider 208g. When the fourth tab 250 is biased and/or clamped to the fourth slider 208g, the fourth tab 250 may be configured to move into an area 252 that is adjacent the fourth tab 250. The fourth tab 250 may move into the area 252 in a direction that is the same or substantially the same as the direction in which the fourth slider 208g is biasing the fourth tab 250.

As shown in Fig. 5, after the first slider 208a biases and/or is clamped to the first tab 222 and the second slider 208h biases and/or is clamped to the second tab 242, opposing ends 216 and 254 may be sealed and/or closed off and material 207 may be injected into the first mold space 206. Where mismatch Tx1 and/or Tx2 may exist between the mold 204 and the structure 202, the first tab 222 and/or the second tab 242 may adapt and/or conform the structure 202 to the mold 204. As a result, when the first slider 208a moves to the biased position, a flush and/or an even contact may be experienced between the first slider 208a and a side 220 of a mold tool 208e and a side 214 of the structure 202. Similarly, when the second slider 208h moves to the biased position, a flush and/or an even contact may be experienced between the second slider 208h and a side 256 of the mold tool 208e and a side 217 of the structure 202. When the flush and/or even contacts are made, flash may be eliminated, reduced, and/or minimized around the ends 216, 254 of the first mold space 206, which may result in seamless transitions between the structure 202 and the material 207, such as along the side 214 and the end 216 and the side 217 and the end 254.

Similarly, after the third slider 208f biases and/or is clamped to the third tab 246 and the fourth slider 208g biases and/or is clamped to the fourth tab 250, opposing ends 258 and 260 may be sealed and/or closed off and material 207 may be injected into the second mold space 240. Where mismatch Tx3 and/or Tx4 may exist between the mold 204 and the structure 202, the third tab 246 and/or the fourth tab 250 may adapt and/or conform to the structure 202 to the mold 204. As a result, when the third slider 208f moves to the biased position, a flush and/or an even contact may be experienced between the third slider 208f and a side 262 of a mold tool 208c and the side 214 of the structure 202. Similarly, when the fourth slider 208g moves to the biased position, a flush and/or an even contact may be experienced between the fourth slider 208g and a side 264 of the mold tool 208c and the side 217 of the structure 202. When the flush and/or even contacts are made, flash may be eliminated, reduced, and/or minimized around the ends 258, 260 of the second mold space 240, which may result in seamless transitions between the structure 202 and the material 207, such as along the side 214 and the end 258 and the side 217 and the end 260.

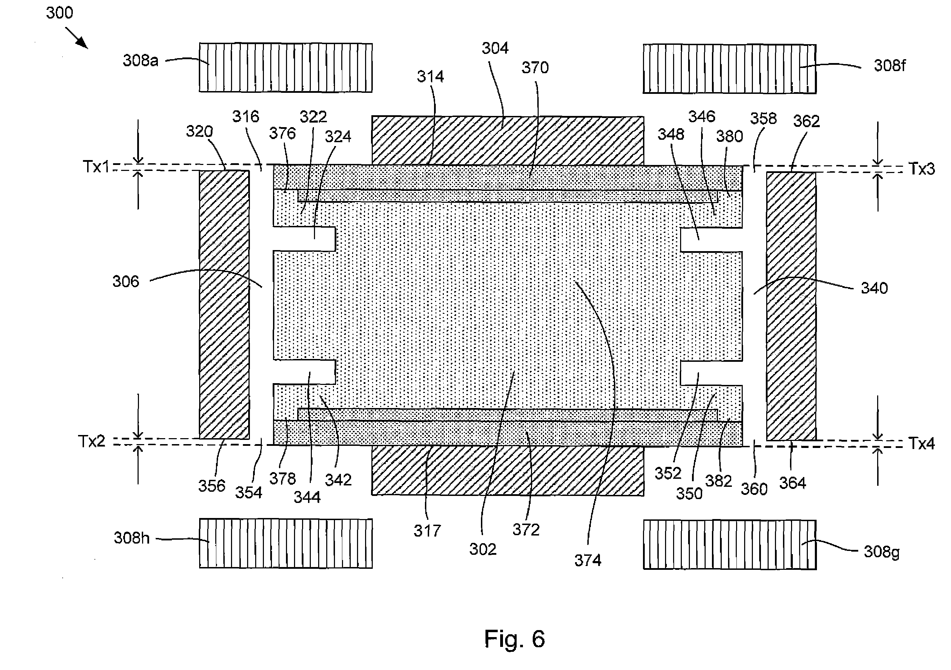

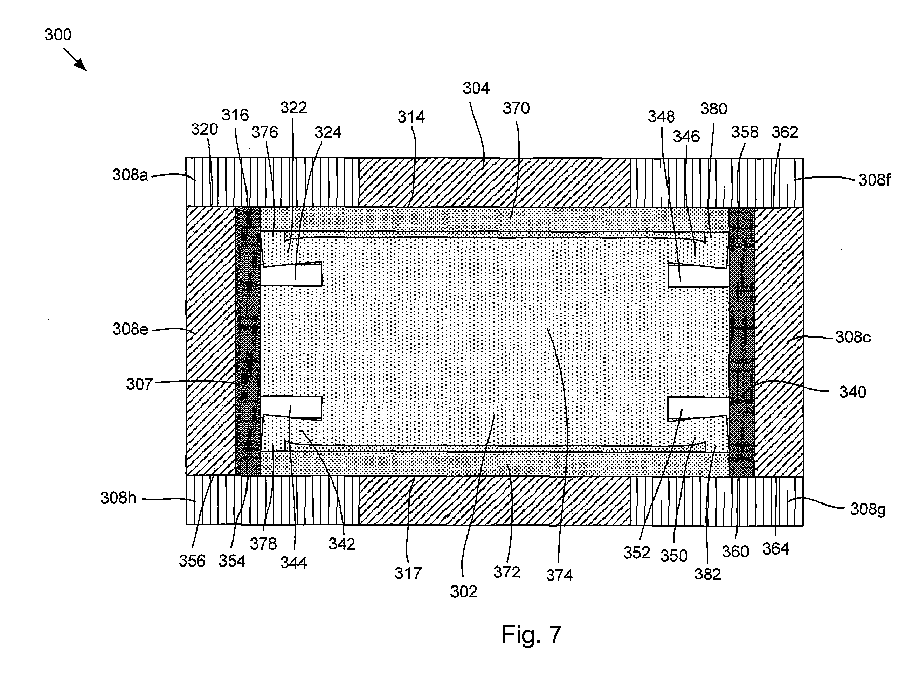

Figs. 6 and 7 show top views of an alternative example system 300 that includes an example structure 302 positioned in an example mold 304 and that may be configured to conform and/or adapt to the mold 304. The example structure 302 may include one or more bars or rails 370, 372 that are affixed to a midplate portion 374. As shown in Figs 6 and 7, the midplate portion 374 may have one or more deformable tabs 322, 342, 346, 350. The midplate portion 374 may be a planar structure. In one example configuration, the midplate portion 374 may be sheet metal. The deformable tabs 322, 342, 346, 350 may be formed by creating notches, slots, or slits 324, 344, 348, 352 in the sheet metal 374.

The side bars 370, 372 may be affixed and/or attached to the midplate portion 374. In some examples, the side bars 370, 371 may have an attachment surface that is configured to attach to the midplate portion 374. The side bars 370, 372 may be welded or soldered to the midplate portion 374, although other processes may be used to affix the side bars 370, 372 to the midplate portion 374. Together, the midplate portion 374 and the side bars 370, 372 may be referred to as a weldment. The side bars 370, 372 may be configured to bias, engage with and/or couple to the tabs 322, 342, 346, 350. In one example configuration, the side bars 370, 372 may be coupled to locating portions 376, 378, 380, 382 of the tabs 322, 342, 346, 350. The locating portions 376, 378, 380, 382 may be protrusions that protrude and/or extend from the tabs 322, 342, 346, 350. Each of the locating portions 376, 378, 380, 382 may protrude and/or extend at an end of the tabs 322, 342, 346, 350. In addition, each of the locating portions 376, 378, 380, 382 may protrude and/or extend in a direction that is perpendicular or substantially perpendicular to the direction in which the tabs 322, 342, 346, 350 extend. Also, the locating portions 376, 378, 380, 382 may extend in a direction that is opposite the direction in which the sliders 308a, 308f, 308g, 308h may bias the tabs 322, 342, 346, 350. The tabs 322, 342, 346, 350 may be configured to receive the bias from the sliders 308a, 308f, 308g, 308h at the locating portions 376, 378, 380, 382. The locating portions 376, 378, 380, 382 may be configured to provide additional strength and/or durability to the tabs 322, 342, 346, 350, which may reduce and/or minimize the likelihood that the tabs 322, 342, 346, 350 become detached and/or break off from the midplate portion 374.

The locating portions 376, 378, 380, 3 82 may be configured to locate and/or engage with the side bars 370, 372. As shown in Fig. 7, when sliders 308a, 308f, 308g, 308h move to a biased position, each of the sliders 308a, 308f, 308g, 308h may engage with, bias and/or clamp to one of the side bars 370, 372. For example, a first slider 308a and a third slider 308f may engage with, bias and/or clamp to the side bar 370. Similarly, the second slider 308h and the fourth slider 308g may engage with, bias and/or clamp to the side bar 372. In turn, where mismatch Tx1, Tx2, Tx3, and/or Tx4, shown in Fig. 6, exists between the mold 304 and the structure 302, the side bars 370, 372 may engage with and/or bias the locating portions 376, 378, 380, 382. When the locating portions 376, 378, 380, 382 are biased by the side bars 370, 372, the tabs 322, 342, 346, 350 may deform and/or move into respective areas 324, 344, 348, 352. As such, the tabs 322, 342, 346, 350 may be indirectly biased by the sliders 308a, 308f, 308g, 308h. That is, the tabs 322, 342, 346, 350 may be biased by sliders 308a, 308f, 308g, 308h without directly coming into contact with the sliders 308a, 308f, 308g, 308h.

By having deformable tabs 322, 342, 346, 350, the structure 302 may adapt and/or conform to any mismatches, such as tolerance mismatches, that exist between the structure 302 and the mold 304. As shown in Fig. 7, when the first slider 308a moves to the biased position, a flush and/or an even contact may be experienced between the first slider 308a and a side 320 of a mold tool 308e and a side 314 of the side bar 370 of the structure 302. Similarly, when the second slider 308h moves to the biased position, a flush and/or an even contact may be experienced between the second slider 308h and a side 356 of the mold tool 308e and a side 317 of the side bar 372 of the structure 302. When the flush and/or even contacts are made, flash may be eliminated, reduced, and/or minimized at and/or around ends 316, 354 of a first mold space 306. As a result, seamless transitions between the structure 302 and the material 307, such as along the side 314 and the end 316 and along the side 317 and the end 3 54 may be experienced.

Similarly, when the third slider 308f moves to the biased position, a flush and/or an even contact may be experienced between the third slider 308f and a side 362 of a mold tool 308c and the side 314 of the structure 302. Similarly, when the fourth slider 308g moves to the biased position, a flush and/or an even contact may be experienced between the fourth slider 308g and a side 364 of the mold tool 308c and the side 317 of the structure 302. When the flush and/or even contacts are made, flash may be eliminated, reduced, and/or minimized at and/or around the ends 358, 360 of the second mold space 340. As a result, seamless transitions between the structure 302 and the material 307 at the side 314 and the end 358 and at the side 317 and the end 360 may be experienced.

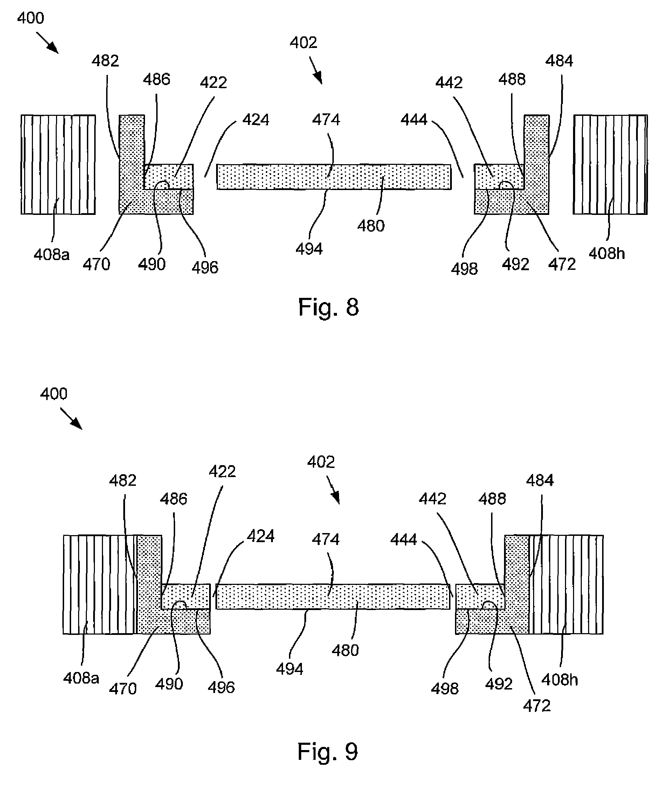

Figs. 8 and 9 show side views of an example system 400 that includes a structure 402 positioned in a mold and that may be configured to conform and/or adapt to the mold. The structure 402 may include a midplate portion 474 that has deformable tabs 422 and 442. The midplate portion 474 may be a planar structure. In one example, the midplate portion 474 may comprise sheet metal. The deformable tabs 422, 442 may be formed by creating gap 424, 444, such as notches, slots, or slits, in the midplate portion 474. The gaps 424, 444 may each have a predetermined distance separating the tabs 422, 442 from a middle portion 480 of the midplate portion 474.

The structure 402 may also include side bars or rails 470, 472. The side bars 470, 472 may have slider engaging portions 482, 484 that are configured to engage with and/or be biased by a slider 408a, 408h. In one example configuration, the slider engaging portions 482, 484 may be side walls or surfaces of the side bars 470, 472 that face the sliders 408a, 408h. For example, the side bar 470 may have a surface 482 of a side wall that faces a slider 408a. As shown in Fig. 9, the surface 482 may be configured to engage with and/or be biased by the slider 408a. Similarly, the side bar 472 may have a surface 484 of a side wall that faces a slider 408h. The surface 484 may be configured to engage with and/or be biased by the slider 408h.

The side bars 470, 472 may also include tab engaging portions 486, 488 that are configured to engage with and/or bias the deformable tabs 422, 442. When the tab engaging portions 486, 488 bias the tabs 422, 442, the tabs 422, 442 may be configured to deform and/or move into the gaps 424, 444. In one example configuration, the tab engaging portions 486, 488 may include side walls or surfaces of the side bars 470, 472 that face the tabs 422, 442. Additionally, the tab engaging portions 486, 488 may have surfaces that oppose the surfaces of the slider engaging portions 482, 484.

The side bars 470, 472 may further include attachment portions 490, 492 that are configured to attach and/or affix to the midplate portion 474 of the structure 402. In one example configuration, the attachment portions 490, 492 may comprise shoulders on which portions 496, 498 of a planar surface 494 of the midplate portion 474 may be positioned. The portions 496, 498 may comprise the planar surfaces of the tabs 422, 442. The portions 496, 498 may be attached to the attachment portions 490, 492 by being welded, although other processes may be used to attach the midplate portion 474 to the side bars 470, 472. In addition, the midplate portion 474 may be attached to the side bars 470, 472 at other areas, other than the portions 496, 498. For example, the tabs 422, 442 may be attached to side bars 470, 472 at the surfaces of the tab engaging portions 486, 488.

As shown in Fig. 8, the sliders 408a, 408h may be configured in an unbiased position. In the unbiased position, the sliders 408a, 408h may be spaced apart from the slider engaging portions 482, 484 of the side bars 470, 472. The slider engaging portions 482, 484 may be unbiased by the sliders 408a, 408h when the sliders 408a, 408h are in the unbiased position. When the slider engaging portions 482, 484 are unbiased by the sliders 408a, 408h, the tabs 422, 442 may be in unbiased positions and may be spaced apart from the middle portion 480 of the midplate portion 474 by a predetermined distance.

As shown in Fig. 9, the sliders 408a, 408h may move from the unbiased position to the biased position and bias the slider engaging portions 482, 484. When the sliders 408a, 408h move to the biased position, the tab engaging portions 486, 488 may in turn bias the tabs 422, 442. Where mismatches exist between the structure 402 and the mold 404, the structure 402 may adapt and/or conform to the mold 404 by deforming and/or moving into the gaps 424, 444. Fig. 9 illustrates the tabs 422, 442 being deformed and/or moved into the gaps 424, 444 by showing a reduced distance between the tabs 422, 442 and the middle portion 480, as compared to the predetermined distance between the tabs 422, 442 and the middle portion 480 when the tabs 422, 442 are unbiased by the sliders 408a, 408h. In other example configurations, the tabs 422, 442 may move a distance within the gaps 424, 444 such that the tabs 422, 442 contact the middle portion 480. By configuring the structure 402 to be deformable in order to adapt and/or conform to the mold 404, an even or flush contact between the sliders 408a, 408h and the slider engaging portions 482, 484 may be experienced such that flash may be eliminated, reduced, and/or minimized.

Referring to Figs. 1-9, the structures 102, 202, 302, 402 may be any structure, object, piece, or component that may be configured to be overmolded with a material. In one example, the structures 102, 202, 302, 402 may be a metal object that is configured to be overmolded with plastic. The structures 102, 202, 302, and/or 402 may be component for an apparatus or a device, such as electronic apparatus or an electronic device. In one example application, the structures 102, 202, 302, and/or 402 may comprise at least part of a plastic/metal hybrid housing for a handheld and/or mobile device.

The deformable tabs and/or the areas adjacent the deformable tabs in which the deformable tabs may deform may be of various sizes and/or dimensions. The sizes and/or dimensions may be determined based on various factors, which may include tolerances and/or tolerance differences between the structure and the mold. In addition or alternatively, the dimensions and/or the geometries may be adjusted based on the material of the deformable tab so that the tab is configured to deform in a predictable and/or designed manner during tool operation. Additionally, the tabs and/or areas in comparison with the remainder of the structures may have the same or different proportionalities as those shown in Figs. 1-9. In one example configuration, the locating portions 376, 378, 380, 382 may be about 0.2 millimeters in length. Also, the deformable tabs may be configured to deform about 0.3 millimeters into adjacent gaps. In addition, the deformable gaps may be about 0.08 millimeters in length and 1.8 millimeters in width. Other dimensions and/or deformations are possible.

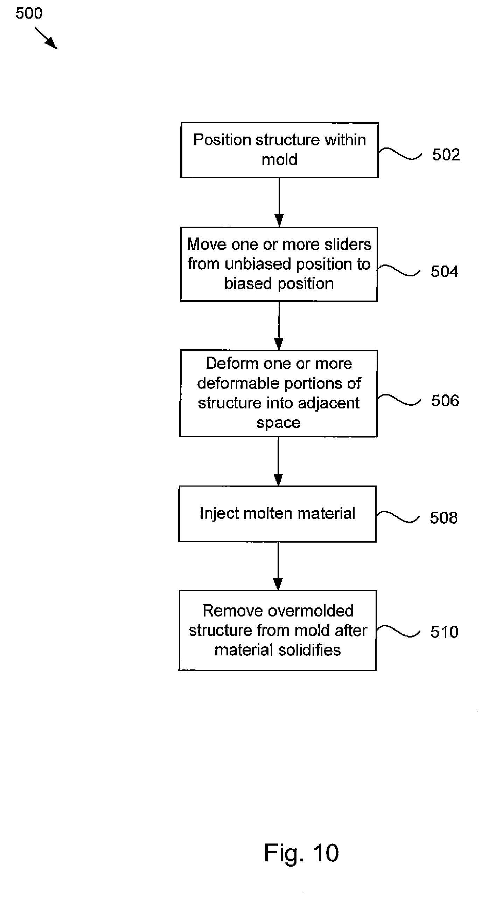

Fig. 10 shows an example method of ovexmolding at least one material to a structure. At block 502, a structure configured to be overmolded is positioned within the mold. The structure may be positioned within the mold so that at least one deformable portion of the structure is aligned with at least one slider. When the structure is positioned, the slider may be in an unbiased position. At block 504, the slider is moved from the unbiased position to the biased position. In the biased position, the slider may bias and/or clamp to the structure in a predetermined direction.

At block 506, the deformable portion of the structure may be biased by the slider and move into an adjacent space or gap. The deformable portion may move or substantially move in the predetermined direction. The deformable portion may move into the adjacent area where mismatches exist between the structure and the mold in which the structure is positioned. By moving into the adjacent area, the mismatches may be reduced, eliminated, and/or minimized, resulting in a flush contact between the slider and a side of the structure. At block 508, molten material may be injected into one or more mold spaces. In some example configurations, the molten material may flow around the deformable portion. Additionally, the molten material may be prevented from flowing outside the mold space so as not to cause flash. At block 510, the overmolded structure is removed from the mold after the molten material solidifies.

While various embodiments of the disclosure have been described, it will be apparent to those of ordinary skill in the art that many more embodiments and implementations are possible within the scope of the disclosure. Accordingly, the disclosure is not to be restricted except in light of the attached claims and their equivalents.

## Claims

1. An apparatus comprising:
a structure (102, 202, 302, 402) configured to be overmolded with a material (107, 207, 307) when positioned in a mold (104, 204, 304 404), the structure comprising:
a deformable portion (122, 222, 322, 422) that is configured to move from an undeformed position to a deformed position when biased by a mold tool (108a, 208a, 308a, 408a) that is configured to close off a mold space (106, 206, 306),
wherein the deformable portion is configured to move from the undeformed position to the deformed position in a direction that is substantially the same as a direction in which the mold tool is biasing the structure.

2. The apparatus of claim 1, wherein the deformable portion comprises a tab that extends from a non-deformable portion (126) of the structure to a side (112, 212) of the structure that at least partially determines the mold space, the tab extending in a direction that is substantially perpendicular to a direction in which the mold tool is biasing the structure.

3. The apparatus of claim 1, wherein the structure further comprises a gap (124, 224, 324, 424) adjacent the deformable portion, wherein the deformable portion is configured to move into the gap when biased by the mold tool.

4. The apparatus of claim 1, wherein the mold tool comprises a first mold tool, and wherein the deformable portion, in the deformed position, has a side that is coplanar with a side (120, 220, 320) of a second mold tool (108e, 208e, 308e) that is biased by the first mold tool to close off the mold space.

5. The apparatus of claim 1, wherein the deformable portion comprises a first deformable portion (122, 222, 322, 422), wherein the mold tool comprises a first mold tool (108a, 208a, 308a, 408a), and wherein the structure further comprises:
a second deformable portion (242, 246, 250, 342, 346, 350, 442) that is configured to move from an undeformed position to a deformed position when biased by a second mold tool (208f, 208g, 208h, 308f, 308g, 308h, 408h) that is configured to close off the mold space (106, 206, 240, 306, 340).

6. The apparatus of claim 5, wherein the second deformable portion is configured to move from the undeformed position to the deformed position in a direction that is opposite the direction that the first deformable portion moves when the first deformable portion moves from the undeformed position to the deformed position.

7. The apparatus of claim 1, wherein the deformable portion comprises a locating portion (376) that protrudes from an end of the deformable portion, wherein the deformable portion is configured to receive the bias from the mold tool at the locating portion.

8. The apparatus of claim 1, wherein the structure further comprises:
a side bar (370, 470) coupled to the deformable portion,
wherein the side bar is configured to engage with the mold tool, and
wherein the side bar biases the deformable portion to move the deformable portion to the deformed position when the side bar is engaged with the mold tool.

9. The apparatus of claim 8, wherein the deformable portion comprises a protrusion (376) that is coupled to the side bar.

10. The apparatus of claim 8, wherein the side bar comprises:
a slider engaging surface (482) that is configured to engage with the mold tool; and
a tab engaging surface (406) that is configured to bias the deformable portion.

11. The apparatus of claim 10, wherein the slider engaging surface opposes the tab engaging surface.

12. The apparatus of claim 8, wherein the structure further comprises:
a planar structure (374, 474) comprising the deformable portion and a notch (324, 424) in which the deformable portion is configured to deform, and
wherein the side bar comprises an attachment surface (490) that is configured to attach to the planar structure.

13. The apparatus of claim 1, wherein the structure is made of metal and the material comprises plastic that is injected into the mold space.

14. The apparatus of claim 1, wherein the apparatus comprises a handheld electronic device, and wherein the structure overmolded with the material comprises a housing for the handheld electronic device.

15. A method of overmolding, the method of comprising:
positioning a structure in a mold, the structure configured to be overmolded with a material;
moving a slider from an unbiased position to a biased position to bias the structure and close off a mold space;
deforming a deformable portion of the structure from an unbiased position to a biased position when the slider is moved to the biased position and biasing the structure, the deformable portion being deformed in a direction that is substantially the same as the direction in which the slider is biasing the structure; and
injecting the material into the mold space using an injection molding process.
